# EUROPÄISCHE PATENTSCHRIFT

(11) **EP 0 882 492 B1**
(45) Veröffentlichungstag und Bekanntmachung des Hinweises auf die Patenterteilung: **06.10.2004**
(21) Anmeldenummer: 98106287.0
(22) Anmeldetag: 06.04.1998
(51) Int. Cl.: B01D 53/86, C02F 1/00, B01J 23/72, B01J 23/34, B01J 23/745

(54) **Katalysator zur Zersetzung von in einem Fluid mitgeführtem Wasserstoffperoxid und Anlage zur Anwendung des Katalysators**
Catalyst for the decomposition of hydrogen peroxide in fluids and apparatus using the catalyst
Catalyseur pour la décomposition de peroxyde d'hydrogène dans des fluides et dispositif utilisant le catalyseur

(30) Priorität: 06.06.1997 DE 19723914
(43) Veröffentlichungstag der Anmeldung: 09.12.1998
(73) Patentinhaber: DSD Dillinger Stahlbau GmbH, 66386 St. Ingbert (DE)
(72) Erfinder: Nobis, Uwe, Dipl.-Ing., 66440 Blieskastel-Brenschelbach (DE)
(74) Vertreter: Bernhardt, Winfrid, Dr.-Ing.

(56) Entgegenhaltungen:
- EP-A- 0 162 022
- EP-A- 0 704 455
- DE-A- 4 333 328
- US-A- 4 969 936

## Beschreibung

Die Erfindung betrifft die Verwendung eines Katalysators zur Zersetzung von Wasserstoffperoxid sowie den Katalysator verwendende Anlagen.

Zur Sterilisation von Verpackungsoberflächen, wie z.B. bei Milchtüten, Joghurt- und Puddingbechern, Hüllfolien, aber auch bei Verpackungen für pharmazeutische Produkte, wird heute überwiegend Wasserstoffperoxid (H₂O₂) eingesetzt.

Hierzu werden zwei Verfahren angewandt, die als gasseitige Anwendung und als wasserseitige Anwendung bekannt sind.

Bei der gasseitigen Anwendung wird Wasserstoffperoxid in speziellen Verdampfern in den gasförmigen Zustand überführt und dieses Gas wirkt dann auf die Verpackungsoberfläche ein und sterilisiert diese.

Bei der wasserseitigen Anwendung werden die zu steriliesierenden Oberflächen einem Wasserstoffperoxid enthaltenden Wasserstrom ausgesetzt.

Diese Verfahren haben den Vorteil, daß weitgehend auf Konservierungsstoffe verzichtet werden kann und daß Wasserstoffperoxid in die zwei natürlichen Stoffe Wasser (H₂O) und Sauerstoff (O₂) zerfällt.

Nach der Sterilisation wird bei der gasseitigen Anwendung die Wasserstoffperoxid enthaltende Abluft über einen Kamin abgeleitet. Bedingt durch seine geringe Zerfallsgeschwindigkeit unter Umgebungsbedingungen ist Wasserstoffperoxid praktisch beständig. Durch seine Aggressivität kann es daher Produktionsanlagen, Gebäude, Fauna und Flora angreifen. Es ist deshalb notwendig, die unmittelbare Umgebung vor seiner zerstörerischen Wirkung zu schützen. Für den Personenschutz ist eine maximale Arbeitsplatzkonzentration (MAK-Wert) für Wasserstoffperoxid von 1 ppm vorgeschrieben.

Bei der wasserseitigen Anwendung kann wertvolles Trinkwasser eingespart werden, wenn das den Sterilisationsbereich verlassende Wasser vom Wasserstoffperoxid befreit wird.

Es ist bekannt, daß die Zerfallsgeschwindigkeit von Wasserstoffperoxid durch Kontakt mit geeigneten Katalysatoren schlagartig erhöht werden kann. Derzeit werden die nachfolgend erläuterten Systeme benutzt.

Als Katalysator benutzte Aktivkohle hat nicht nur den Nachteil, daß sie brennbar ist. Es findet nämlich in den Kapillaren eine Kondensation (sog. Kapillarkondensation) des gasförmigen Wasseranteils statt. Dies führt zum Verstopfen der aktiven Zentren und macht somit die Aktivkohle nach kurzer Zeit unbrauchbar.

Es sind auch Trägermaterialien mit Edelmetallbeschichtungen auf dem Markt, die hydrophile Eigenschaften aufweisen, weshalb sich auch bei solchen Katalysatoren die aktiven Zentren mit Wasser zusetzen und sodann nicht mehr für die katalytische Reaktion zur Verfügung stehen. Ein weiteres System ist die Kombination eines hydrophoben Trägermaterials mit einer Edelmetallbelegung, wie z.B. Platin oder Palladium. Durch die hydrophobe Eigenschaft des Trägermaterials bleibt während des Gebrauchs die katalytisch wirksame Oberfläche unvermindert erhalten, jedoch sind deratige Katalysatoren durch den Edelmetallanteil sehr teuer.

Aus der DE 43 33 328 A ist es bekannt, in einer Lösung enthaltenes Wasserstoffperoxid durch einen Mangan-, Eisen- oder Kupferoxidkatalysator zu zersetzen, wobei der Katalysator auf einem Zeolith-Trägermaterial angeordnet ist.

Der vorliegenden Erfindung liegt die Aufgabe zugrunde, die Umweltbelastung bei gasseitiger Anwendung von Wasserstoffperoxid zur Sterilisation zu verringern.

Diese Aufgabe wird durch Verwendung eines Katalysators, bei welchem ein hydrophobes Trägermaterial mit einer Oberflächenschicht aus katalytisch wirksamem Material versehen ist, das aus einer Gruppe ausgewählt wird, die Mangan-, Eisen- und Kupferoxid umfasst, zur Zersetzung von in einem Gasstrom mitgeführtem Wasserstoffperoxid gelöst.

Durch die Verwendung des Katalysators wird eine rasche, katalytische Zerlegung von Wasserstoffperoxid im Abluftgasstrom in Wasser und Sauerstoff gefördert, wobei der Katalysator seine Wirksamkeit über einen ausreichend langen Zeitraum beibehält und wesentlicht preisgünstiger ist als die vorstehend beschriebenen Katalysatoren mit hydrophobem Trägermaterial und Edelmetallbelegung. Zugleich sollen Anlagen geschaffen werden, die es ermöglichen, mit diesem Katalysator gasförmige Strömungsmittel vom mitgeführten Wasserstoffperoxid zu befreien bzw. Vorratstanks für Wasserstoffperoxid ohne Gefährdung der Umgebung zu belüften.

Vorzugsweise wird als Trägermaterial ein Zeolith eingesetzt, der sich für diesen Zweck als besonders vorteilhaft erwiesen hat. Das Verhältnis von Siliziumoxid zu Aluminiumoxid ist bei diesen Zeolithen ein Maß für dessen hydrophobe Eigenschaften. Eine besonders vorteilhafte Ausführungsform besteht darin, daß das SiO₂/Al₂O₃-Verhältnis des Zeolithen größer ist als 40.

Nach einer weiteren vorteilhafte Ausgestaltung besteht das Trägermaterial aus einem extrudierten, durch einen hydrophoben Binder gebundenen, pulverförmigen Zeolithmaterial, das in schüttfähige Stücke zerkleinert ist.

Eine alternative Ausführungsform besteht darin, daß als Trägermaterial verschlungene Drähte auf Nickelbasis eingesetzt werden, und zwar vorzugsweise schüttfähige Drahtformlinge, die nach einer vorteilhaften Ausgestaltung als Drahtgestrickformlinge ausgebildet sind.

Um den Katalysator zur Befreiung des Gasstroms von mitgeführtem Wasserstoffperoxid zu verwenden, ist erfindungsgemäß eine Anlage so ausgebildet, daß in einem Gasführungskanal in Strömungsrichtung aufeinanderfolgend ein Feinstaubvorfilter, eine Katalysatoreinheit in Form eines Schüttgutkatalysators und ein Ventilator angeordnet sind, wobei vorzugsweise der Schüttgutkatalysator einen seinen Durchströmquerschnitt umgrenzenden Rahmen aufweist, sowie zwei in Strömungsrichtung mit Abstand voneinander angeordnete, mit dem Rahmen verbundene, den Durchströmquerschnitt ausfüllende Gitterelemente aus Maschendraht, wobei der Raum zwischen dem Rahmen und den beiden Gitterelementen mit schüttfähigen Katalysatorelementen ausgefüllt ist, der Rahmen durch Klemmbügel gegen eine am Gasführungskanal angeordnete und dem Rahmen zugeordnete Anlageschulter spannbar ist und zwischen dem Rahmen und der Anlageschulter eine umlaufende Dichtung angeordnet ist, und wobei der Rahmen , die Gitterelemente, die Anlageschulter und die Klemmbügel aus einem korrosionsbeständigen Metall bestehen, als welches vorzugsweise und wahlweise Edelstahl und/oder meerwasserbeständiges Aluminium verwendet ist. Durch diese Anordnung von Rahmen, Anlageschulter, Klemmbügel und Dichtung wird bei ausreichen-der Dimensionierung Nekalichtigkeit (Schaummitteltest) erreicht.

Nach einer ersten Ausführungsform ist der Rahmen in einer die Längsachse des Gasführungskanals rechtwinklig schneidenden Ebene angeordnet.

Um die katalytisch wirksame Fläche zu vergrößern, besteht eine besonders vorteilhafte Ausführungsform darin, daß im Strömungsquerschnitt wenigstens eine Gruppe aus zwei einander paarweise zugeordneten Rahmen angeordnet ist, die beiderseits einer jeder Gruppe zugeordneten, parallel zur Längsachse des Gasführungskanals verlaufenden Symmetrieebene in Durchströmrichtung der Anlage ihren Abstand voneinander ändern, und zwar voerzugsweise derart, daß sie sich in Durchströmrichtung der Anlage einander nähern, wobei vorzugsweise den von der Wandung des Gasführungskanals abgelegenen Rahmenseiten eine die Anlageschulter aufweisende, den Gasführungskanal durchquerende Stütze zugeordnet ist.

Auch wenn die Anlage im Kreislaufbetrieb arbeitet, d.h. der Gasstrom nach dem Bestreichen der zu sterilisierenden Oberflächen nicht aus der Anlage abgeleitet, sondern auf diese Oberflächen zurückgeführt wird, ist es erforderlich, das von den Oberflächen abströmende Gas zunächst vom Wasserstoffperoxid zu befreien und dies dann vor dem Anströmen der zu sterilisierenden Flächen wieder in der gewünschten Dosierung zuzuführen, weil nur dadurch sichergestellt werden kann, daß auch bei längerem Kreislaufbetrieb die gewünschte Dosierung gleichbleibend aufrechterhalten wird.

Wird die Anlage im Kreislaufbetrieb eingesetzt, ist nach einer weiteren zweckmäßigen Ausgestaltung zwischen der Katalysatoreinheit und dem Ventilator ein Kühler eingefügt, der vorzugsweise mit einem Tropfenabscheider versehen ist.

Nach einer weiteren vorteilhaften Ausgestaltung kann auf den Ventilator ein Schwebstofffilter folgen.

Eine Anlage zur Entlüftung eines Wasserstoffperoxyd enthaltenden Tanks unter Verwendung eines erfindungsgemäßen Katalysators ist derart ausgestaltet, daß in einer vom Tank ausgehenden Entlüftungsleitung auf einen Vorfilter eine mit wenigstens einem Schüttgutkatalysator versehene Katalysatoreinheit folgt.

Auch bei diesen Anlagen können die bei der vorstehend beschriebenen Anlage zur Reinigung eines Gasstroms bereits ) erläuterten Konstruktionsmerkmale der Katalystoreinheit sinngemäß Anwendung finden.

Anhand der nun folgenden Beschreibung von in der Zeichnung dargestellten Ausführungsbeispielen der Erfindung wird diese näher erläutert.

Es zeigt:
- Fig. 1: eine schematische Darstellung einer Anlage zur katalytischen Reinigung waserstoffperoxidhaltiger Abluft einer Verpackungsmaschine mit Fortluftführung,
- Fig. 2: eine schematische Seitenansicht der Reinigungseinheit dieser Anlage,
- Fig. 3: eine schematische Draufsicht auf die Reinigungseinheit,
- Fig. 4: eine der Fig. 2 ähnliche Seitenansicht einer anderen Ausführungsform der Reinigungeinheit,
- Fig. 5: eine Draufsicht zu Fig. 4,
- Fig. 6: eine der Fig. 1 ähnliche Darstellung einer Anlage zur katalytischen Reinigung waserstoffperoxidhaltiger Abluft einer Verpackungsmaschine mit Kreislaufführung,
- Fig. 7: eine schematische Seitenansicht der Reinigungseinheit der in Fig. 6 gezeigten Anlage,
- Fig. 8: eine Draufsicht zu Fig. 7,
- Fig. 9: eine schematische Darstellung der in Fig. 2 gezeigten Anordnung der zwei untere Gruppen bildenden Schüttgutkatalysatoren,
- Fig. 10: einen Schnitt nach der Linie B-B in Fig. 9,
- Fig. 11: eine Ansicht in Richtung des Pfeils A in Fig. 9,
- Fig. 12: einen Darstellung in vergrößertem Maßstab des Details X in Fig. 11 und
- Fig. 13: eine schematische Darstellung einer Entlüftung für einen Wasserstoffperoxidtank.

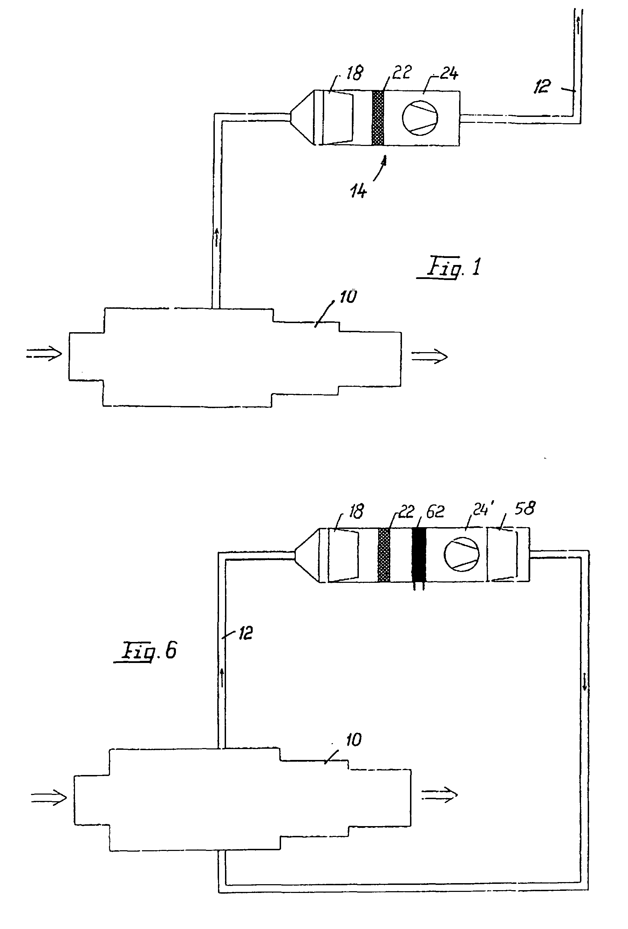

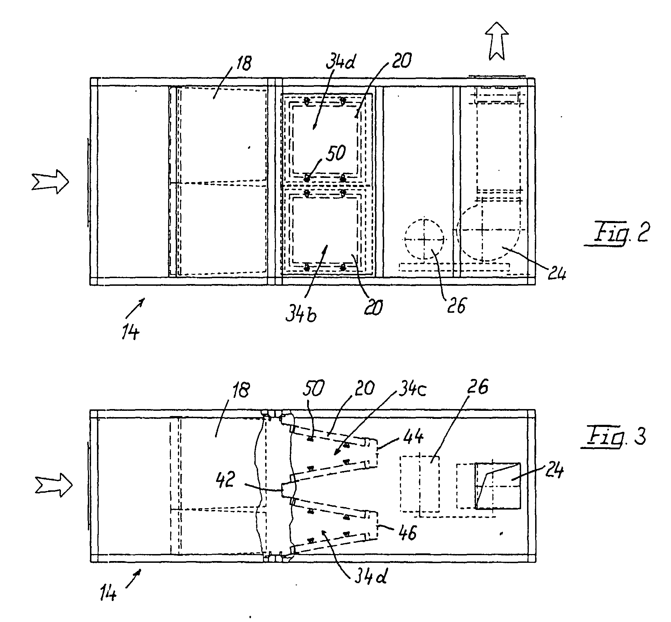

In den Fig. 1 bezeichnet 10 eine Verpackungsmaschine, in welcher die mit dem zu verpackenden Gut in Kontakt gelangenden Oberflächen der Verpackung durch die Einwirkung von Wass erstoffperoxid sterilisiert werden. Die aus der Verpackungsmaschine 10 austretende Abluft wird über eine Leitung 12 ins Freie abgeleitet. In die Leitung 12 ist eine insgesamt mit 14 bezeichnete Reinigungseinheit eingefügt, die einen Vorfilter 18 in Form eines Feinstaubfilters, eine aus acht Schüttgutkatalysatoren 20 (Fig. 2, 3) gebildete Katalysatoreinheit 22 und einen Ventilator 24 mit Antriebsmotor 26 umfaßt.

Die Reinigungseinheit 14 ist in der von lufttechnischen Anlagen her bekannten Modulbauweise ausgeführt, bei der sich die in Strömungsrichtung aufeinanderfolgenden, formstabilen Bauelemente unter Bildung eines luftdicht abgeschlossenen Strömungskanals aneinanderfügen, wie dies in den Fig. 2 und 3 gezeigt ist.

Der Vorfilter 18 schützt den Katalysator vor atmosphärischem Staub, der in der Abluft enthalten sein kann.

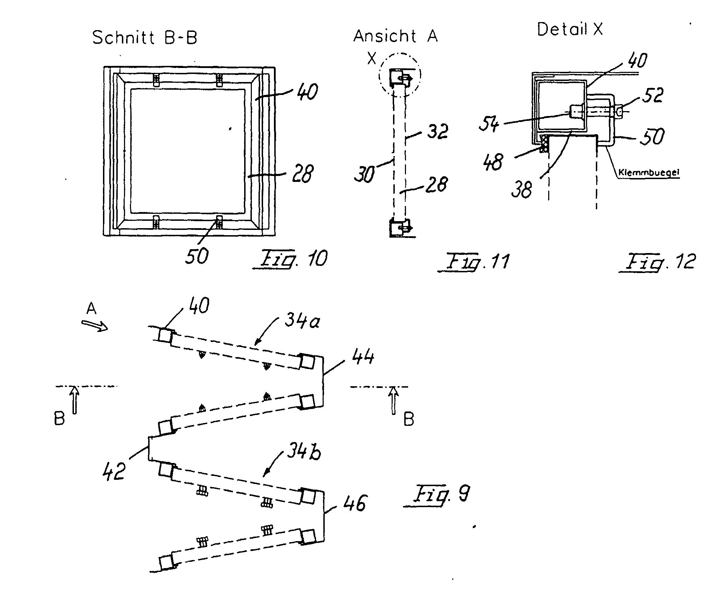

Die Schüttgutkatalysatoren 20 bestehen aus einem Edelstahlrahmen 28 (Fig. 10), der mit einem der Rahmenbreite entsprechenden Abstand zwei zueinander parallele, aus Edelstahlmaschendraht gebildete Gitter 30 und 32 aufweist, zwischen denen das schüttfähige Katalysatromaterial eingeschlossen ist.

Bei der Ausführungsform nach den Fig. 2 und 3 sind insgesamt vier Gruppen 34a, 34b, 34c und 34d von jeweils zwei Schüttgutkatalysatoren 20 vorgesehen, wobei sich die beiden Schüttgutkatalysatoren 20 jeder Gruppe in der Durchströmrichtung des Strömungskanals einander, im Grundriß etwa V-förmig, nähern. Dabei sind zwei Gruppen 34a und 34b nebeneinander und vertikal über diesen zwei weitere Gruppen 34c und 34d angeordnet. Den Rahmen 28 der Schüttgutkatalysatoren 20 ist jeweils zur Abstützung an dem den Strömungskanal umschließenden Gehäuse 36 der Katalysatoreinheit 22 eine Anlageschulter 38 an einem allgemein mit 40 bezeichneten Rahmen aus einem Edelstahl-Hohlprofil zugeordnet.

Am stromauf gelegenen Ende der vier Gruppen 34a - 34d sind diese Rahmen 40 einander jeweils in horizontaler Richtung benachbarter Gruppen 34a und 34b bzw. 34c und 34d an einer ) den Strömungskanal in vertikaler Richtung durchquerenden Stütze 42 angeschlossen; am stromab gelegenen Ende jeder Gruppe sind die beiden Rahmen 40 der jeweils verikal übereinander angeordneten Gruppen 34a und 34c bzw. 34b und 34d an zwei weiteren vertikalen Stützen 44 und 46 angeschlossen.

Zwischen jedem Schüttgutkatalysator 20 und der ihm jeweils zugeordneten Anlageschulter 38 ist eine umlaufende, rahmenartige Dichtung 48 angeordnet. Mittels mehrerer Klemmbügel 50 und einer jedem Klemmbügel 50 zugeordneten Spannschraube ) 52, die in ein ihr zugeordnetes Gewindestück 54 am Rahmen 40 eingeschraubt werden kann, werden die Rahmen 28 der Schüttgutkatalysatoren 20 gegen die Rahmen 40 gespannt und dabei wird die Dichtung 48 fest zwischen beiden Rahmen 28 und 40 eingeklemmt.

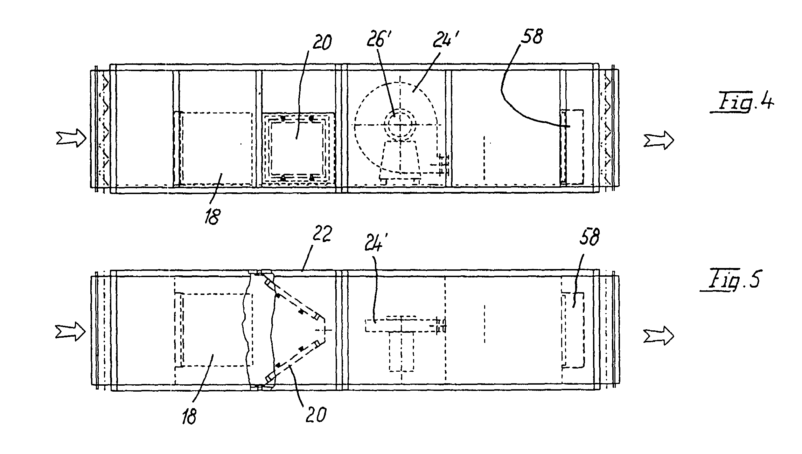

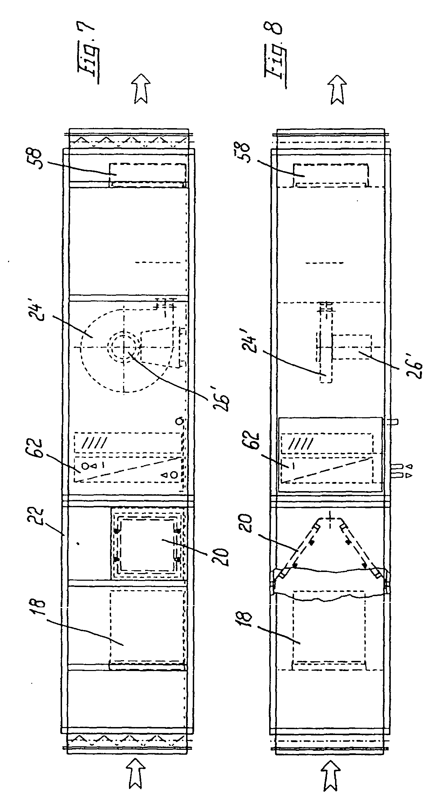

Die Fig. 4 und 5 zeigen eine erste Ausführungsvariante für einen Kreislaufbetrieb, wobei auf die mit einem Motor 26' und einem Ventilator 24' versehene Ventilatorbaugruppe noch ein Schwebstoffilter 58 folgt. Die Katalysatoreinheit 22' ist bei dieser Ausführungsvariante mit einer einzigen Gruppe von zwei V-förmig angeordneten Schüttgutkatalysatoren 20 versehen, die nicht die ganze Höhe des Strömungskanals einnehmen, weshalb der in Fig. 4 sichtbare Raum 60 über den Schüttgutkatalysatoren 20 geschlossen ist, um den gesamten Luftstrom über die Schüttgutkatalysatoren 20 zu leiten.

Eine Anlage mit Kreislaufführung ist schematisch in Fig. 6 dargestellt, wobei bei dieser Variante als weitere Baugruppe ein als Kühler dienender Wärmetauscher 62 mit Tropfenabscheider in den Strömungskanal einbezogen ist, der auch in den Fig. 7 und 8 dargestellt ist.

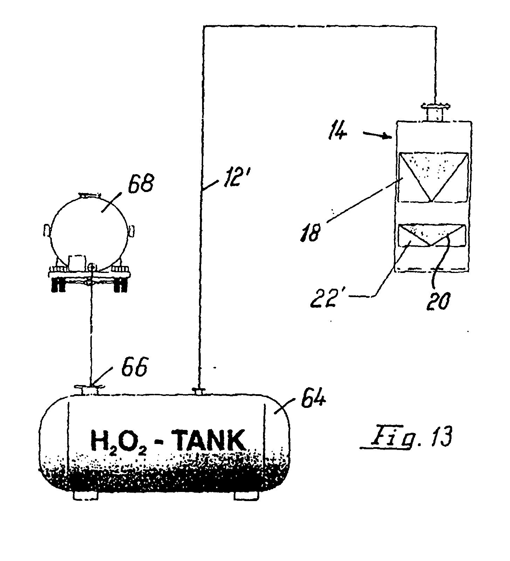

Den Einsatz des erfindungsgemäßen Katalysators bei der Entlüftung eines H₂O₂-Tanks 64 zeigt die Fig. 13. Die Befüllung des Tanks 64 erfolgt über einen Befüllungsstutzen 66 von einem Tankfahrzeug 68 aus. Die aus dem Tank entweichende, H₂O₂ enthaltende Luft wird über eine Leitung 12' abgeführt, in die eine Reinigungseinheit 14' einbezogen ist, die einen Vorfilter 18' zum Schutz des Katalysators und eine Katalysatoreinheit 22' umfaßt, die mit Schüttgutkatalysatoren 20 der vorstehend beschriebenen Art versehen ist.

## Patentansprüche

1. Verwendung eines Katalysators (20), bei welchem ein hydrophobes Trägermaterial mit einer Oberflächenschicht aus katalytisch wirksamem Material versehen ist, das aus einer Gruppe ausgewählt wird, die Mangan-, Eisen- und Kupferoxid umfasst, zur Zersetzung von in einem Gasstrom mitgeführtem Wasserstoffperoxid.

2. Verwendung nach Anspruch 1, **dadurch gekennzeichnet, daß** als Trägermaterial ein Zeolith eingesetzt wird.

3. Verwendung nach Anspruch 2, **dadurch gekennzeichnet, daß** als Trägermaterial ein Zeolith eingesetzt wird, dessen SiO₂/Al₂O₃-Verhältnis größer als 40 ist.

4. Verwendung nach einem der Ansprüche 2 oder 3, **dadurch gekennzeichnet, daß** ein Trägermaterial eingesetzt wird, das aus einem extrudierten, durch einen hydrophoben Binder gebundenen, pulverförmigen Zeolithmaterial besteht, das in schüttfähige Stücke zerkleinert ist.

5. Verwendung nach Anspruch 1, **dadurch gekennzeichnet, daß** ein Trägermaterialeingesetzt wird, das aus einem verschlungenen Draht auf Nickelbasis besteht.

6. Verwendung nach Anspruch 5, **dadurch gekennzeichnet, daß** ein Trägermaterial eingesetzt wird, das aus schüttfähigen Drahtformlingen besteht.

7. Verwendung nach Anspruch 6, **dadurch gekennzeichnet, daß** ein Trägermaterial eingesetzt wird, das aus Drahtgestrickformlingen besteht.

8. Anlage zur Befreiung eines Gasstroms von mitgeführtem Wasserstoffperoxid unter Anwendung des nach einem der Ansprüche 1 bis 7 verwendeten Katalysators, daß in einem Gasführungskanal in Strömungsrichtung aufeinanderfolgend ein Feinstaubvorfilter (18), eine den Katalysator in Form eines Schüttgutkatalysators (20) enthaltende Einheit (22) und ein Ventilator (24) angeordnet sind.

9. Anlage nach Anspruch 8, **dadurch gekennzeichnet, daß** der Schüttgutkatalysator (20) eineh seinen Durchströmquerschnitt umgrenzenden Rahmen (28) aufweist, sowie zwei in Strömungsrichtung mit Abstand voneinander angeordnete, mit dem Rahmen (28) verbundene, den Durchströmquerschnitt ausfüllende Gitterelemente (30, 32), daß der Raum zwischen dem Rahmen (28) und den beiden Gitterelementen (30, 32) mit schüttfähigen Katalysatorelementen ausgefüllt ist, daß der Rahmen (28) durch Klemmbügel (50) gegen eine am Gasführungskanal angeordnete und dem Rahmen zugeordnete Anlageschulter (38) spannbar ist, und daß zwischen dem Rahmen (28) und der Anlageschulter (38) eine umlaufende Dichtung (48) angeordnet ist, wobei der Rahmen (28), die Gitterelemente (30, 32), die Anlageschulter (38) und die Klemmbügel (50) aus einem korrosionsbeständigen Metall bestehen.

10. Anlage nach Anspruch 9, **dadurch gekennzeichnet, daß** als korrosionsbeständiges Metall wahlweise Edelstahl und/oder meerwasserbeständiges Aluminium verwendet ist.

## Claims

1. Use of a catalyst (20), in which a hydrophobic support material is provided with a surface layer of catalytically active material, which is selected from a group comprising manganese oxide, iron oxide and copper oxide, for the decomposition of hydrogen peroxide entrained in a gas stream.

2. Use according to Claim 1, **characterized in that** a zeolite is used as the support material.

3. Use according to Claim 2, **characterized in that** a zeolite with a SiO₂/Al₂O₃ ratio greater than 40 is used as the support material.

4. Use according to either of Claims 2 and 3, **characterized in that** a support material which consists of an extruded pulverulent zeolite material which is bound by a hydrophobic binder and broken down into free-flowing pellets is used.

5. Use according to Claim 1, **characterized in that** a support material which comprises a nickel-based twisted wire is used.

6. Use according to Claim 5, **characterized in that** a support material which comprises free-flowing formed wire pellets is used.

7. Use according to Claim 6, **characterized in that** a support material which comprises formed wire mesh pellets is used.

8. Apparatus for freeing a gas stream of entrained hydrogen peroxide using the catalyst in the way specified by one of Claims 1 to 7, in that a fine-dust preliminary filter (18), a unit (22) containing the catalyst in the form of a free-flowing catalyst (20) and a fan (24) are arranged one following the other in the direction of flow in a gas duct.

9. Apparatus according to Claim 8, **characterized in that** the free-flowing catalyst (20) has a frame (28) enclosing its flow cross section, and also two grid elements (30, 32), arranged at a distance from each other in the direction of flow, connected to the frame (28) and filling the flow cross section, **in that** the space between the frame (28) and the two grid elements (30, 32) is filled with free-flowing catalyst elements, **in that** the frame (28) can be clamped by clamp straps (50) against an abutment shoulder (38) arranged on the gas duct and assigned to the frame, and **in that** a peripheral seal (48) is arranged between the frame (28) and the abutment shoulder (38), the frame (28), the grid elements (30, 32), the abutment shoulder (38) and the clamp straps (50) consisting of a corrosion-resistant metal.

10. Apparatus according to Claim 9, **characterized in that** optionally stainless steel and/or seawater-resistant aluminium is used as the corrosion-resistant metal.

## Revendications

1. Utilisation d'un catalyseur (20), où un matériau support hydrophobe est pourvu d'une couche de surface en matériau catalytiquement actif, qui est choisi dans un groupe comprenant l'oxyde de manganèse, de fer et de cuivre, pour la décomposition de peroxyde d'hydrogène entraîné dans un flux gazeux.

2. Utilisation selon la revendication 1, **caractérisée en ce qu'**on utilise une zéolithe comme matériau support.

3. Utilisation selon la revendication 2, **caractérisée en ce qu'**on utilise comme matériau support une zéolithe dont le rapport SiO₂/Al₂O₃ est supérieur à 40.

4. Utilisation selon l'une quelconque des revendications 2 ou 3, **caractérisée en ce qu'**on utilise un matériau support qui est constitué par un matériau zéolithe sous forme de poudre, extrudé, lié par un liant hydrophobe qui est concassé en morceaux pouvant être déversés.

5. Utilisation selon la revendication 1, **caractérisée en ce qu'**on utilise un matériau support qui est constitué par du fil entrelacé à base de nickel.

6. Utilisation selon la revendication 5, **caractérisée en ce qu'**on utilise un matériau support qui est constitué de pièces formées en fil pouvant être déversées.

7. Utilisation selon la revendication 6, **caractérisée en ce qu'**on utilise un matériau support constitué par des pièces formées en tricot de fil.

8. Installation pour libérer un flux gazeux de peroxyde d'hydrogène entraîné en utilisant le catalyseur utilisé selon l'une quelconque des revendications 1 à 7, en ce qu'on a disposé dans un canal de guidage du gaz, l'un derrière l'autre dans le sens de l'écoulement, un préfiltre pour les poussières fines (18), une unité (22) contenant le catalyseur sous forme d'un catalyseur en vrac (20) et un ventilateur (24).

9. Installation selon la revendication 8, **caractérisée en ce que** le catalyseur en vrac (20) présente un cadre (28) délimitant sa section d'écoulement ainsi que deux éléments en treillis (30, 32) disposés à une certaine distance l'un derrière l'autre dans le sens de l'écoulement, raccordés au cadre (28), remplissant la section d'écoulement, **en ce que** l'espace entre le cadre (28) et les deux éléments en treillis (30, 32) est rempli avec des éléments de catalyseur pouvant être déversés, **en ce que** le cadre (28) peut être serré par des étriers de serrage (50) contre un épaulement d'appui (38) disposé au canal de guidage du gaz et associé au cadre et **en ce qu'**on a disposé entre le cadre (28) et l'épaulement d'appui (38) un joint (48) périphérique, le cadre (28), les éléments en treillis (30, 32), l'épaulement d'appui (38) et les étriers de serrage (50) étant constitués par un métal résistant à la corrosion.

10. Installation selon la revendication 9, **caractérisée en ce qu'**on utilise comme métal résistant à la corrosion au choix de l'acier spécial et/ou de l'aluminium résistant à l'eau de mer.
